# EUROPÄISCHE PATENTSCHRIFT

(11) **EP 1 153 861 B1**
(45) Veröffentlichungstag und Bekanntmachung des Hinweises auf die Patenterteilung: **17.03.2004**
(21) Anmeldenummer: 00127415.8
(22) Anmeldetag: 14.12.2000
(51) Int. Cl.: B65G 53/32, E04F 21/12

(54) **Verfahren und Vorrichtung zur Befeuchtung von trockenen Spritzmassen in der Förderleitung**
Method and device for humififying, inside a conveyor duct, dried injection materials
Procédé et dispositif pour humidifier, dans une conduite de transport, des matières sèches à injecter

(30) Priorität: 11.05.2000 DE 10023170
(43) Veröffentlichungstag der Anmeldung: 14.11.2001
(73) Patentinhaber: Wolf, Kurt, 45219 Essen (DE)
(72) Erfinder: Wolf, Kurt, 45219 Essen (DE); Kretschmer, Horst, Dr.-Ing., 09600 Weissenborn (DE)
(74) Vertreter: Weisse, Renate, Dr.

(56) Entgegenhaltungen:
- DE-A- 4 444 405
- DE-A- 19 516 753
- FR-A- 2 350 450
- GB-A- 1 327 297
- US-A- 3 226 036
- US-A- 4 648 920
- US-A- 5 131 590

## Beschreibung

Die Erfindung betrifft ein Verfahren und eine Vorrichtung zur Befeuchtung von trockenen Spritzmassen in der Förderleitung und für die technische Verbesserung der Spritztechnik sowie für die umweltfreundliche Verarbeitung von trockenen Spritzmassen.

Die Erfindung ist einsetzbar in der baustoffverarbeitenden Industrie, bei der Verarbeitung von schüttgutförmigem Feuerfestmaterial in der Metallurgie sowie im Ofenbau, bei Reaktorauskleidungen in der Chemieindustrie und bei Verbrennungsanlagen für das Spritzen auf kalte und heiße Wandungen.

Das Spritzen von pulverförmigen Massen ist bekannt und in der Bau- und Feuerfestindustrie weit verbreitet. Im Vordergrund steht dabei das Naßspritzen von mit Wasser angemaischten, trockenen Betonmassen, die auf kalte oder bis 1600 °C heiße Wände aufgespritzt werden.

Die pulverförmigen Massen besitzen Teilchengrößen zwischen 0 und 12 mm. Das Anmaischen erfolgt in Spezialmischern. Die Komponenten werden dabei exakt dosiert. Mittels Pumpen oder Schnecken wird die nasse Spritzmasse bei Erzeugung sehr hoher Förderdrücke über Förderleitungen und Spritzdüsen transportiert. Das Aufspritzen auf Wände geschieht bei dem Naßspritzen staubfrei, umweltfreundlich und als homogene Schicht. Abhängig vom Grobkorn- und Zementanteil in diesen Spritzmassen muß der Spritzdruck an der Düsenmündung variiert werden. Dazu wird an der Düsenmündung Druckluft aufgegeben, um die Spritzmasse zu beschleunigen. Um ein rasches Abbinden der feuchten Spritzmasse zu erreichen, werden an der Düsenmündung flüssige Additive (Abbindehilfen) wie Wasserglas zugesetzt. Damit werden auch der Rückpralleffekt der groben Teilchen und der Spritzmasseverlust drastisch verringert. Diese Spritztechnik ist unter den Firmenbezeichnungen "Shotcast, Shotcreting, Shotrox, Spraycast der Firmen MPT MASTERPIECE Technology, LAFARGE, PLIBRICO bekannt und auf dem Markt etabliert.

Um den hohen Aufwand an Maschinentechnik und die hohen Förderdrücke für die nassen Spritzmassen zu umgehen, wurde der Weg beschritten, trockene Spritzmassen zu fördern und erst in der Förderleitung mit Wasser zu befeuchten (siehe PS DE 2556797 C 3, "Spritzmaschine für pulverförmige Massen").

Die Befeuchtung erfolgte dabei an ein oder zwei Stellen in 0,5 bzw. 10 m vor der Spritzdüse. Zusätzlich wurde Druckluft an einer dritten Stelle im Förderschlauch stromabwärts vor den Befeuchtungsstellen zur Turbulenzerhöhung zugegeben. Das Wasser wurde mittels Materialbefeuchtungsvorrichtungen zugeführt. Diese Vorrichtungen (Mischdüsen) bestanden aus einer Wasserringkammer, aus der mehrere Bohrungen radial in das Förderrohr führten. Das Wasser wurde als geschlossener Strahl in die Trockenmasse eingeleitet. Spezielle Mischdüsen dieser Art sind aus Patentschriften bekannt. (PS DE 2556 797 C 3 "Spritzmaschine für pulverförmige Massen" und GM DE 7622 864 3 "Mischdüse zum Befeuchten von Massen in Schlauchleitungen")

Der Stand der Technik ist bei den Naßspritzverfahren mit einer aufwendigen Technik, einem großen Instandhaltungs- sowie Betriebskostenaufwand und bei den Trockenspritzverfahren mit Einschränkungen in der Spritzqualität verbunden. Die Einschränkungen bestehen darin, daß die Befeuchtung unvollkommen und die Spritzschicht an der Wandung nicht homogen, d.h. nicht frei von trockenen Nestern sind. Die optimale Position der Mischdüse liegt bei unterschiedlichen Spritzmassen an unterschiedlichen Stellen vor der Spritzdüse. Deshalb tritt mal eine unvollkommene, aber auch ein anderes Mal eine stellenweise zu starke Befeuchtung ein. Zu frühes Abbinden und Verstopfer sind die Folge. Diese Mängel ergeben sich auch aus der Verstopfung von radialen Bohrungen, woraus eine Ungleichverteilung des Wassers folgt. Zugesetzte Bohrungen werden nicht selbständig frei. Sie werden auch beim Spritzen kaum erkannt.

Die Druckschrift US-A-3 226 036 offenbart ein Befeuchtungsgerät, in dem Druckluft einer mit Wasser gespeisten Vorkammer zugeführt und das Gemisch aus Druckluft und Wasser dann durch Bohrungen in die Förderleitung eingeführt wird.

Der Erfindung liegt die Aufgabe zugrunde, ein Verfahren und eine Vorrichtung zu schaffen, mit denen die vorgenannten Nachteile beseitigt und Trockenmassen nach Befeuchtung in der Förderleitung in hoher Qualität sowie umweltfreundlich verspritzt werden können. Diese Aufgaben werden erfindungsgemäß durch das Verfahren mit den Merkmalen des Anspruches 1 und durch die Vorrichtung mit den Merkmalen des Anspruches 3 gelöst. Die Merkmale des Anspruches 2 dienen der Ausgestaltung des Anspruches 1.

Die erfindungsgemäße Lehre baut auf Erkenntnissen auf, die beim praktischen Betrieb gewonnen wurden. Es wurde erkannt,
- daß das Zusetzen von Bohrungen für die Zuführung von Befeuchtungsmittel in die Förderleitung zwangsläufig ausgeschlossen werden muß,
- daß das Befeuchtungsmittel vor Eintritt in die trockene Spritzmasse zerstäubt und prallfrei der Spritzmasse zugeführt werden muß und
- daß das Vermischen von zerstäubtem Befeuchtungsmittel mit trockener Spritzmasse hochturbulent erfolgen muß und durch die damit gegebene große spezifische Oberfläche sowie Verwirbelung der Mischkomponenten ein intensiver und rascher Stoffaustausch eintritt.

Erfindungsgemäß wird die Lehre so umgesetzt, daß in die von der Spritzmaschine kommende Förderleitung ca. 0,5 bis 1,5 m vor dem Ende der Spritzdüse das Befeuchtungsgerät für Wasser installiert wird. Dem Befeuchtungsgerät wird Druckluft und Wasser über Leitungen zugeführt Das Wasser wird von der Wasserpumpe aus einem Wasserspeicher angesaugt, über das Drosselventil in das Befeuchtungsgerät gedrückt. Die der Spritzmasse proportionale, erforderliche Wassermenge wird mit dem Drosselventil eingestellt und mit dem Durchflußmesser für Wasser kontrolliert.
Das Befeuchtungsgerät für Wasser besteht aus zwei getrennten Kammern, d.h., eine für Druckluft und eine für Wasser. Aus der Kammer für Druckluft führen eine oder, mehrere kapillarenartige, flach zur Förderleitungsachse stromabwärts geneigte Bohrungen in die Förderleitung hinein. Ober diese Bohrungen entspannt die Druckluft annähernd kritisch, d.h., bei Geschwindigkeiten über 150 bis 300 m/s. Der Vordruck in der Luftkammer wird mittels des Druckminderers eingestellt und konstant gehalten. Mittig jeder Kapillarrohrlänge stößt im rechten Winkel eine Wasser-Kapillare auf das Druckluft-Kapillarrohr, die gemeinsam eine Venturi-Sprühdüse bilden. Das im Betrieb in den Luftstrahl gesaugte Wasser wird zu Nebel zerstäubt und benetzt die trockene Spritzmasse so intensiv, auch infolge der starken Luftverwirbelungen, daß die Befeuchtung im sehr kurzen Mischrohr nach dem Befeuchtungsgerät abgeschlossen wird. Da die Kapillaren für Wasser in die Luftkapillaren zurückgesetzt sind und die Druckluft fast kritisch entspannt wird, kann ein Verstopfer beider Kapillaren nicht eintreten. Die Gleichverteilung des Wassers und die homogene Mischung werden damit gesichert.

Mit diesen Verfahren und dieser Vorrichtung werden ein staubfreies Arbeiten, homogene Spritzschichten, geringe Mischstrecken und geringe Druckverluste sowie eine geringe Verstopfungsneigung der Förderleitung erreicht. Diese Vorteile sind bei schnell abbindenden Spritzmassen und weiten Förderwegen besonders von Bedeutung.

Absperr- und Rückschlagventil werden für In- und Außerbetriebnahmen sowie als Schutz gegen Rückströmungen bei Spülvorgängen benötigt.
Das erfindungsgemäße Verfahren und die erfindungsgemäße Vorrichtung können auch für Spritzmassen mit einer breiten Teilchengrößenverteilung zur Nachbefeuchtung mit einem schnell abbindendem Additiv (Härter wie Wasserglas) benutzt werden, um den Rückpralleffekt der Grobteile zu unterbinden und den Spritzmasseverlust zu verringern. Dabei wird die gleiche Vorrichtung wie bei der Wasserbefeuchtung installiert, lediglich erfolgt die Ansaugung der Befeuchtungsflüssigkeit aus einem Flüssigkeitsspeicher und das Befeuchtungsgerät für das Additiv wird unmittelbar zwischen Mischrohr und Spritzdüse gesetzt. Die zuvor beschriebene Befeuchtung mit Wasser kann damit mengenmäßig verringert werden. Sie bleibt aber als Vorbefeuchtung parallel in Betrieb.

Aus Untersuchungen hat sich als vorteilhaft erwiesen, daß die zur Zerstäubung zugeführte Druckluft nie unter das Druckniveau der Förderluft in der Förderleitung sinken darf, damit nicht die Spritzmasse die Kapillaren des Befeuchtungsgerätes zusetzt. Erfindungsgemäß wurde dieser mögliche Zustand eliminiert, indem der Druckminderer aus der Druckluftleitung entfernt und die Förderluft- sowie Druckluftleitung aus einem gemeinsamen Druckluftspeicher versorgt wurden. Die zur Zerstäubung nötige Druckluft wurde mit einer Drossel fix eingestellt. Diese Lösung ist ökonomisch günstiger als mit Druckminderer. Ein Fremdeingriff ist dann auch nicht möglich.

### Ausführungsbeispiel

Ein Ausführungsbeispiel soll auf Basis von
- FIGUR 1:: Verfahren und Vorrichtung zur Befeuchtung von trockenen Spritzmassen in der Förderleitung
- FIGUR 2:: Verfahren und Vorrichtung zur Vor- und Endbefeuchtung von trockenen Spritzmassen in der Förderleitung
erläutert werden.

### Ausführungsbeispiel

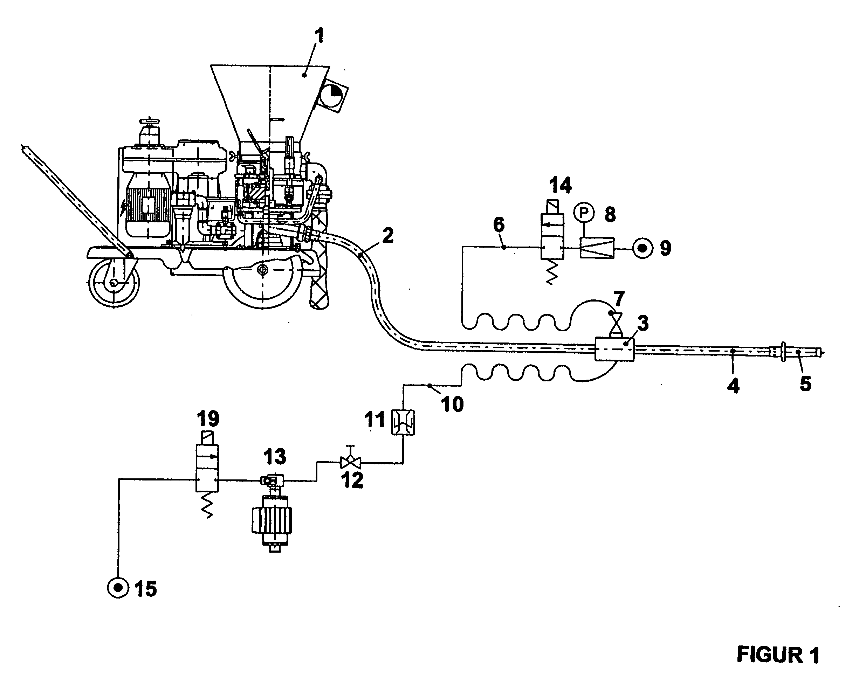

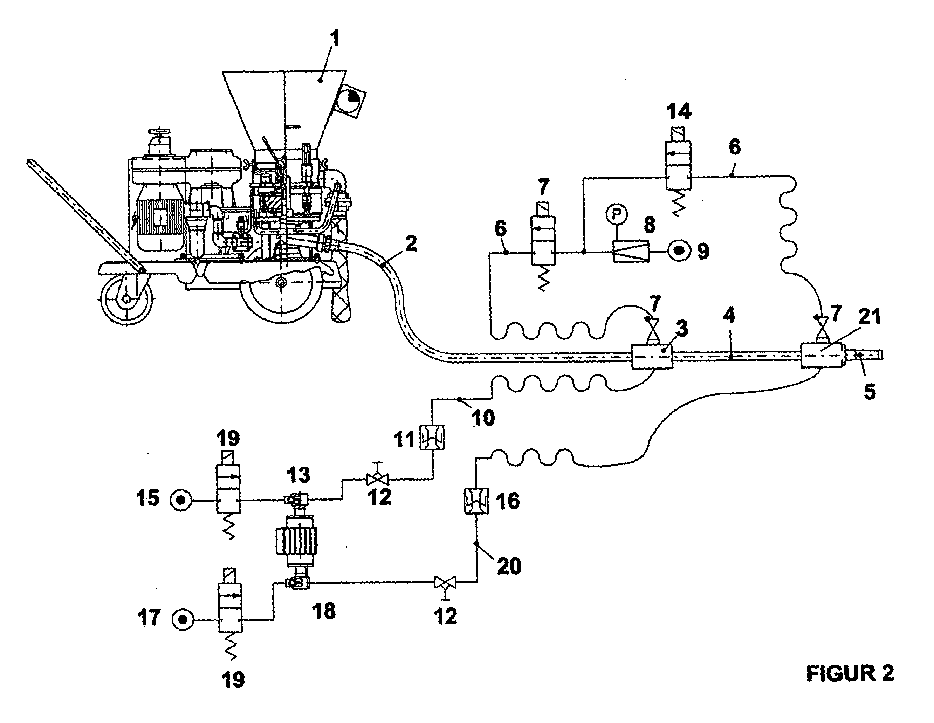

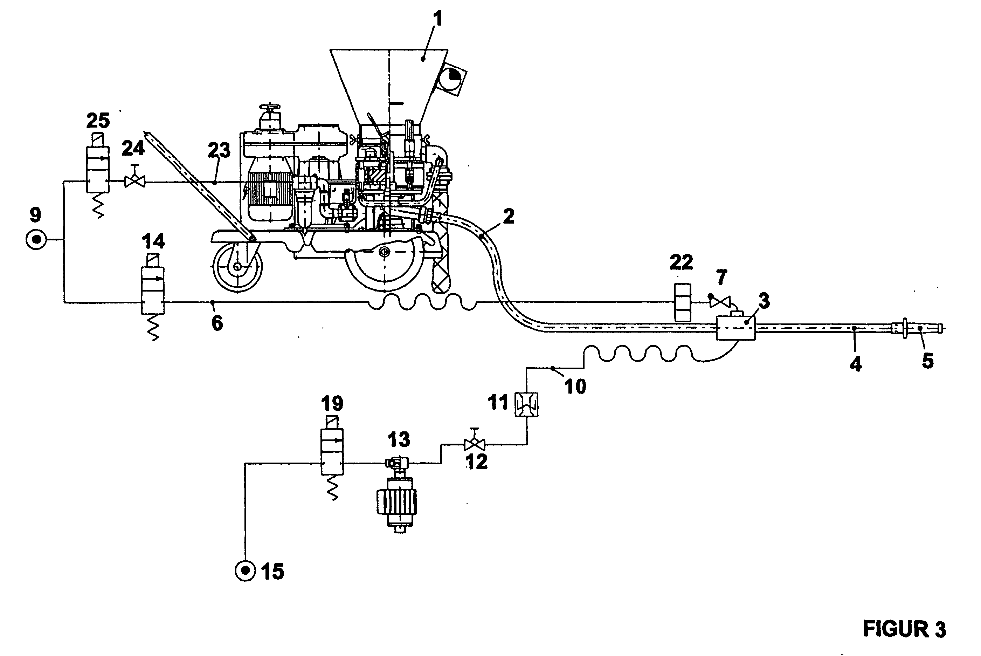

Es wird feinkörnige, trockene Spritzmasse, die bereits einen Anteil an pulverförmigen Härter enthält, zur Reparatur der Innenwände eines Kupolofens eingesetzt. Da die Spritzmasse feinkörnig ist und pulverförmige Härter enthält, ist kein Rückprall und damit kaum Spritzmasseverlust zu erwarten. Es wird deshalb das Befeuchtungsgerät für Wasser 3 gemäß FIGUR 1 eingesetzt. Eine Nachbefeuchtung mit einem Additiv gemäß FIGUR 2 wird nicht benötigt. Es wird mit einem pneumatischen Förderstrom an trockener Spritzmasse von 2000 kg/h gespritzt, dem 5 % Wasser in der Förderleitung 2, d.h. 100 kg/h, zugeführt werden. Den pneumatischen Förderstrom liefert die Spritzmaschine 1. Der Wasserstrom wird mit der Wasserpumpe 13 aus dem Wasserspeicher 15 gesaugt, mit dem Drosselventil 12 in Verbindung mit dem Durchflußmesser 11 eingestellt und über die Wasserleitung 10 in das Befeuchtungsgerät 3 gedrückt. Das Wasser wird dort mit Druckluft bei hoher, annähernd kritischer Geschwindigkeit zerstäubt, und beide Komponenten strömen gemeinsam bei Erzielung eines hohen Mischeffektes und intensiver Benetzung in die trockene Spritzmasse. Die Mischung erfolgt sehr rasch, weshalb ein Mischrohr 4 mit nur einer Länge von 1 m verwendet wird. Die Spritzdüse 5 trägt durch die konische Verengung zur Intensivierung des Mischeffektes bei.
Die Druckluftzuführung zum Befeuchtungsgerät 3 erfolgt aus dem Druckluftspeicher 9. Sie wird im Druck mittels Druckminderer 8 reduziert und über die Druckluftleitung 6 sowie das Rückschlagventil 7 in 3 eingeleitet. Bei Beendigung der Spritzarbeiten schaltet die Spritzmaschine 1 ab und nach einer Minute Spülzeit schließen die Absperrventile 14 und 19 Druckluft- bzw. Wasserzufuhr.

### Bezugszeichenliste

- 1: Spritzmaschine
- 2: Förderleitung für trockene Spritzmasse
- 3: Befeuchtungsgerät für Wasser
- 4: Mischrohr
- 5: Spritzdüse
- 6: Druckluftleitung
- 7: Rückschlagventil
- 8: Druckminderer
- 9: Druckluftspeicher
- 10: Wasserleitung
- 11: Durchflußmesser für Wasser
- 12: Drosselventil
- 13: Wasserpumpe
- 14: Absperrventil
- 15: Wasserspeicher
- 16: Durchflußmengenmesser für Flüssigkeit
- 17: Flüssigkeitsspeicher
- 18: Flüssigkeitspumpe
- 19: Absperrventil
- 20: Flüssigkeitsleitung
- 21: Befeuchtungsgerät für Flüssigkeit
- 22: Drossel
- 23: Förderluftleitung
- 24: Drosselventil
- 25: Absperrventil

## Patentansprüche

1. Verfahren zur Befeuchtung von trockenen Spritzmassen in der Förderleitung mittels einer pneumatisch stetig fördernden Spritzmaschine, mittels einer Förderleitung mit Spritzdüse und mittels eines Befeuchtungsgerätes sowie mit einem Mischrohr,
**dadurch gekennzeichnet,**
- **daß** das Befeuchtungsgerät für Wasser (3) als Venturi-Sprühgerät arbeitet, d.h. Druckluft von dem mit dem Druckminderer (8) eingestellten Druck über ein in Förderrichtung zur Förderrohrachse geneigtes Kapillarrohr annähernd kritisch in die Förderleitung (2) hinein mit hoher Geschwindigkeit entspannt und dabei das der Kapillare an deren Einschnürung zugeführte Wasser für die Befeuchtung von der Druckluft zu einem Wassemebel zerstäubt wird, Druckluft und zerstäubtes Wasser unter starker Verwirbelung, intensiver Vermischung sowie Benetzung in den Spritzmasse-Strom eindringen,
- **daß** das Mischrohr (4) infolge des hohen Mischeffektes nur eine Länge zwischen 0,5 und 1,5 m benötigt und
- **daß** die Druckluft aus einem Druckluftspeicher (9), über eine Druckluftleitung (6) sowie ein Rückschlagventil (7) und das Wasser über die Wasserleitung (10), in der sich die Wasserpumpe (13), das Drosselventil (12) und der Durchflußmesser (11) für die Mengeneinstellung und -kontrolle befinden, dem Befeuchtungsgerät (3) zugeführt werden.

2. Verfahren nach Anspruch 1, **dadurch gekennzeichnet, daß** der Druckluftspeicher (9) die Förderluftleitung (23) zur Spritzmaschine (1) und die Druckluftleitung (6) zum Befeuchtungsgerät (3) gemeinsamen ohne Druckminderer (8) versorgt, die Druckluftmenge zum Befeuchtungsgerät (3) mittels Drossel (22) definiert eingestellt wird und daß damit auch im Falle einer Verstopfung im Bereich stromabwärts hinter dem Befeuchtungsgerät (3) kein Eindringen von Spritzmasse stromaufwärts in die Kapillaren des Befeuchtungsgerätes (3) auftreten kann, denn der Druck in der Druckluftleitung (6) unterschreitet in keinem Betriebsfall den Druck in der Förderleitung (2) sowie im Mischrohr (4).

3. Verfahren nach Anspruch 1 und 2, **dadurch gekennzeichnet, daß** zwischen Mischrohr (4) und Spritzdüse (5) ein zweites Befeuchtungsgerät für Flüssigkeit (21) mit Venturi-Sprüh-Funktion installiert wird und ein schnell abbindendes Additiv zur Endbefeuchtung der mit dem Befeuchtungsgerät (3) vorbefeuchteten Spritzmasse in die Förderleitung eingebracht wird, um den Rückprall von groben Spritzmasseteilchen an den Spritzflächen zu eliminieren.

4. Vorrichtung zur Befeuchtung von trockenen Spritzmassen in der Förderleitung zur Realisierung der Verfahren nach den Ansprüchen 1 und 3, **dadurch gekennzeichnet,**
- **daß** das Befeuchtungsgerät für Wasser (3) und für Flüssigkeit (21) aus zwei separaten Kammern für Druckluft bzw. für Wasser/Flüssigkeit besteht, wobei aus der Kammer für Druckluft ein oder mehrere kapillarenartige, flach zur Förderleitungsachse stromabwärts geneigte Bohrungen in die Förderleitung führen und mittig auf diese Kapillaren jeweils im Winkel von 90° eine Kapillare für Wasser/Flüssigkeit mündet und die Kapillare für Luft die Form einer Venturidüse besitzt, wobei an der Einschnürung der Venturidüse die Kapillare für Wasser mündet/endet,
- **daß** das Mischrohr (4) eine Länge zwischen 0,5 und 1,5 m besitzt,
- **daß** die Druckluftleitung (6) mit einem Druckminderer (8) und mit einem Rückschlagventil (7) zur Vermeidung von durch Rückströmung eintretenden Verschmutzungen der Wasserzuführungen ausgerüstet ist und
- **daß** die Wasserleitung (10) eine Wasserpumpe (13), ein Drosselventil (12) für die Wassermengeneinstellung, einen Durchflußmesser (11) für die Kontrolle der Wassermenge und ein Absperrventil (19) für die In- sowie Außerbetriebnahme besitzt, um den Wasser- bzw: Flüssigkeitsspeicher (15, 17) absperren zu können.

5. Vorrichtung zur Befeuchtung von trockenen Spritzmassen in der Förderleitung nach den Ansprüchen 1, 2 und 4, **dadurch gekennzeichnet, daß** in der Druckluftleitung (6) kein Druckminderer installiert wird, für die Einstellung der Druckluftmenge eine Drossel (22) vorgesehen wird und die Förderluftleitung (23) sowie die Druckluftleitung (6) in den gemeinsamen Druckluftspeicher (9) eingebunden werden.

## Claims

1. Method for moistening dry injection moulding material in the conveyor pipe line by means of a pneumatic, continuously conveying moulding machine by means of a conveyour pipe line with an injection moulding nozzle and by means of a moistening device as well as a mixing tube,
**characterized in that**
- the moistening device for water (3) operates as a Venturi-spraying device, i.e. compressed air almost critically expands into the conveyor pipe line (2) with high speed from the pressure controlled by the pressure reducer through a capillary tube inclined in the conveying direction towards the axis of the conveyor pipe and the water fed to the capillary at its throat for the moistening is nebulized by the compressed air as a water cloud, compressed air and nebulized water enter the injection moulding material flow with strong turbulence, intensive mixing and moistening,
- the mixing tube (4) only requires a length of between 0,5 and 1,5 m due to the high mixing effect and
- the compressed air is fed to the moistening device (3) from a compressed air reservoir (9) via a pipe line for compressed air (6) and a back pressure valve (7), the water is fed to the moistening device via a water pipe line (10) wherein a water pump (13), the flow control valve (12) and the flowmeter (11) are arranged for setting and checking the amounts.

2. Method according to claim 1, **characterized in that** the reservoir for compressed air (9) supplies the conveyor pipe line (23) to the moulding machine (1) and the pipe line for compressed air (6) to the common moistening device (3) without a pressure reducer (8), the amount of compressed air to the moistening device (3) is set in a defined manner by the throttle (22) and that therefore even in the case of blocking in the area downstream behind the moistening device (3) no entering of injection moulding material can occur upstream into the capillaries of the moistening device (3), because the pressure in the pipe line for compressed air (6) is never lower than the pressure in the conveyor pipe line (2) and the mixing tube (4) in any mode of operation at all.

3. Method according to claim 1 and 2, **characterized in that** a second moistening device for fluid (21) with Venturi-spray-function is installed between the mixing tube (4) and injection moulding nozzle (5) and a fast setting additive for the end moistening of the injection moulding material pre-moistened with the moistening device (3) is fed to the conveyor pipe line to eliminate the backflow of rough injection moulding material pieces at the injection moulding surfaces.

4. Device for moistening dry injection moulding materials in the conveyor pipe line for carrying out a method according to claims 1 and 3, **characterized in**
- **that** the moistening device for water (3) and for liquid (21) consists of two separate chambers for compressed air or water/liquid, respectively, one or more capillary-like bore holes leading from the chamber for compressed air to the conveyor pipe line, the bore holes being slightly inclined downstream with respect to the axis of the conveyor pipe line and a capillary for water/liquid ending in the middle of these capillary with an angle of 90° and the capillary for air has the form of a venturi nozzle, the throat of the venturi nozzle joining/ending in the capillary for water,
- **that** the mixing tube (4) has a length between 0,5 and 1,5 m,
- **that** the pipe line for compressed air (6) is equipped with a back pressure valve (7) for avoiding contamination of the water pipe lines caused by back flow and
- the water pipe line (10) has a water pump (13), a flow control valve (12) for setting the amount of water, a flowmeter (11) for the checking of the amount of water and a stop valve (19) for switching on and off the operation to be able to close the water- or liquid reservoir (15, 17), respectively.

5. Device for moistening dry injection moulding materials in the conveyor pipe line according to claims 1, 2 and 4, **characterized in that** no pressure reducer is installed in the pipe line (6) for compressed air, a throttle (22) is provided for setting the amount of compressed air and the conveyor air pipe line (23) and the pipe line for compressed air (6) are inserted in the common reservoir (9) for compressed air.

## Revendications

1. Procédé pour l'humidification de matériaux à injecter secs dans le conduit de transport au moyen d'une machine à injecter à transport pneumatique en continu, au moyen d'un conduit de transport muni d'une buse d'injection et au moyen d'un humidificateur ainsi qu'avec un tube mélangeur,
**caractérisé en ce que**
- l'humidificateur d'eau (3) travaille comme un diffuseur Venturi, c. à d. que l'air comprimé se détend à une vitesse élevée, de façon presque critique, suite à la pression contrôlée par le réducteur de pression (8) et passe par un tube capillaire incliné dans le sens du transport par rapport à l'axe du tube de transport pour entrer à l'intérieur du conduit de transport (2), pulvérisant en brouillard d'eau l'eau d'humidification de l'air comprimé amenée au capillaire au niveau de son rétrécissement, que l'air comprimé et l'eau nébulisée pénètrent dans le courant de matériau à injecter en créant d'importants tourbillons et en étant intensément mélangés et mouillés,
- la longueur du tube mélangeur (4) a seulement besoin d'être comprise entre 0,5 et 1,5 m suite à l'effet de mélange important et
- l'air comprimé provenant d'un réservoir d'air comprimé (9) est amené à l'humidificateur (3) en passant par une conduite d'air comprimé (6) ainsi qu'une soupape de retenue (7) et que l'eau est amenée à l'humidificateur (3) en passant par la conduite d'eau (10) dans laquelle se trouvent la pompe à eau (13), la soupape d'étranglement (12) et le débitmètre (11) destinés au réglage et au contrôle du débit.

2. Procédé selon la revendication 1, **caractérisé en ce que** le réservoir d'air comprimé (9) alimente, sans réducteur de pression (8), aussi bien la conduite d'air de transport (23) vers la machine à injecter (1) que la conduite d'air comprimé (6) vers l'humidificateur (3), que le débit d'air comprimé pour l'humidificateur (3) est réglé de façon définie au moyen d'un dispositif d'étranglement (22), et que, ainsi, même en cas d'obstruction dans le domaine situé en aval derrière l'humidificateur (3), le matériau à injecter ne peut pas pénétrer en amont dans les capillaires de l'humidificateur (3) car la pression dans la conduite d'air comprimé (6) n'est, en fonctionnement, en aucun cas inférieure à la pression dans la conduite de transport (2) ainsi que dans le tube mélangeur (4).

3. Procédé selon la revendication 1 et 2, **caractérisé en ce qu'**un second humidificateur de liquide (21) faisant fonction de diffuseur de Venturi est installé entre le tube mélangeur (4) et la buse d'injection (5) et un additif de prise rapide destiné à l'humidification finale du matériau à injecter humidifié préalablement à l'aide de l'humidificateur (3) est placé dans la conduite de transport afin d'empêcher le rebondissement de grosses particules de matériau à injecter contre les surfaces devant recevoir l'injection.

4. Dispositif pour l'humidification de matériaux à injecter secs dans le conduit de transport destiné à la réalisation des procédés d'après les revendications 1 et 3, **caractérisé en ce que**
- l'humidificateur d'eau (3) et de liquide (21) se compose de deux chambres séparées pour l'air comprimé et pour l'eau/le liquide respectivement, un ou plusieurs perçages conçus comme des capillaires et d'inclinaison plane par rapport à l'axe du conduit de transport menant de la chambre d'air comprimé vers le conduit de transport, et un capillaire pour l'eau/le liquide débouchant à chaque fois au centre de ces capillaires à un angle de 90°, et le capillaire pour l'air possédant la forme d'une tuyère de Venturi, le capillaire pour l'eau débouchant/se terminant au niveau du rétrécissement de la tuyère de Venturi,
- le tube mélangeur (4) présente une longueur comprise entre 0,5 et 1,5 m,
- le conduit d'air comprimé (6) est équipé d'un réducteur de pression (8) et d'une soupape de retenue (7) destinés à éviter toute impureté logée dans les arrivées d'eau et due au courant retour et
- le conduit d'eau (10) possède une pompe à eau (13), une soupape d'étranglement (12) destinée au réglage du débit d'eau, un débitmètre (11) destiné au contrôle du débit d'eau et une soupape d'arrêt (19) destinée à la mise en service ainsi qu'à la mise hors service afin de pouvoir arrêter le réservoir d'eau et de liquide respectivement (15,17).

5. Dispositif pour l'humidification de matériaux à injecter secs dans le conduit de transport d'après les revendications 1, 2 et 4, **caractérisé en ce qu**'aucun réducteur de pression n'est installé dans le conduit d'air comprimé (6), qu'un dispositif d'étranglement (22) est prévu pour le réglage du débit d'air comprimé et que le conduit d'air de transport (23) ainsi que le conduit d'air comprimé (6) sont incorporés dans le réservoir d'air comprimé (9) commun.
